# FASCICULE DE BREVET EUROPEEN

(11) **EP 4 026 763 B1**
(45) Date de publication et mention de la délivrance du brevet: **20.03.2024**
(21) Numéro de dépôt: 22150393.1
(22) Date de dépôt: 05.01.2022
(51) Int. Cl.: B62K 25/28, B62M 9/16

(54) **VÉHICULE MOTORISÉ DOTÉ D'UN MÉCANISME À EFFET DE CHAÎNE PROGRESSIF**
MOTORISIERTES FAHRZEUG MIT EINEM MECHANISMUS MIT ANTI-SQUAT-WIRKUNG
MOTOR VEHICLE PROVIDED WITH A MECHANISM WITH ANTI-SQUAT EFFECT

(30) Priorité: 06.01.2021 FR 2100097
(43) Date de publication de la demande: 13.07.2022
(73) Titulaire: Yamaha Hatsudoki Kabushiki Kaisha, Iwata, Shizuoka (JP)
(72) Inventeur: Offenstadt, Eric, 34200 Sète (FR)
(74) Mandataire: Brungard, Yves Francois

(56) Documents cités:
- EP-A1- 0 113 333
- FR-A1- 2 370 624
- JP-A- S50 131 239
- JP-Y2- S6 012 796
- US-A- 4 789 042
- US-B1- 6 189 639

## Description

### Domaine technique

L'invention concerne un véhicule motorisé, notamment à une ou deux roues avant et à une roue arrière suspendue dotée d'une transmission par un lien souple tel qu'une chaîne ou courroie crantée, tels que les scooters, les cyclomoteurs, les motocyclettes, et notamment les motos sportives ou destinées à la compétition, doté d'un mécanisme à effet de chaîne progressif.

### Technique antérieure

Dans la configuration de l'art antérieur, les bras de suspension sont oscillants autour d'un axe situé derrière le pignon de sortie de boite de vitesse et sont agencés de façon à se combiner avec la géométrie de la transmission pour induire un phénomène appelé « effet de chaîne », ledit effet de chaîne est aussi appelé « anti-squat» par l'homme de l'art.

L'effet de chaîne est une force opposée à la compression de la suspension induite d'une part par les transferts de charge et d'autre part par la force centrifuge en virage. L'effet de chaîne traditionnel empêche la suspension de venir en butée en virage, il est dégressif en compression et augmente pendant la détente induisant une assiette haute en ligne droite et subséquemment des délestages néfastes de l'avant [aussi appelés « wheelies » par l'homme de l'art et] induisant l'obligation de limiter la puissance du moteur, notamment par un contrôle électronique du moteur.

L'art antérieur représenté par le brevet FR 3 084 328 A1, montre au contraire des valeurs progressives d'accélérations instantanées induites de roues, mesurées au sol (« IIWA ») ou « Instant Induced Wheel Accélérations » en anglais et subséquemment un effet de chaîne progressif, la valeur dudit effet de chaîne augmente entre la détente maximum et la fin de la compression. Ladite valeur peut-être choisie exponentielle, et de plus de 100% en compression et nulle ou négative en détente maximum.

Le document WO 2020/136578 A1 montre différentes configurations permettant d'obtenir un ajustement de l'effet de chaîne en fonction du degré d'enfoncement de la suspension.

La variation programmée de la position de l'axe du bras situé en avant de l'excentrique implique que l'axe de roue ne suive plus un rayon de courbure et induise une longueur de chaîne variable. Sans mesure particulière, l'ajustement de l'effet de chaîne est limité par le risque de dysfonctionnement de la transmission par lien souple si celui-ci est trop détendu.

Les documents JP S50 131239 A, EP 0 113 333 A1 et JP S60 12796 Y2 montrent divers mécanismes d'ajustement de la tension de chaîne. Le document FR 2 370 624 A1 montre un dispositif de réglage de la position de l'axe d'oscillation du bras de suspension. Le document susmentionné JP S50 131239 A divulgue un véhicule motorisé selon le préambule de la revendication 1.

### Exposé de l'invention

L'invention vise à fournir un véhicule dont la suspension comporte un mécanisme à effet de chaîne progressif moins limité que dans l'art antérieur.

Avec ces objectifs en vue, l'invention a pour objet un véhicule motorisé tel que défini dans la revendication 1.

En ajoutant un mécanisme de tension du lien qui appuie sur le lien, on permet de fournir un mécanisme d'ajustement progressif d'un effet de chaîne moins limité que dans l'art antérieur. On peut appliquer de plus grandes variations sur l'ajustement de l'effet de chaîne que dans l'art antérieur. La compensation de la longueur du lien se fait simplement en appuyant ponctuellement sur un brin du lien. Même si ce n'est pas obligatoire, on préférera un appui sur un brin détendu en phase d'accélération.

Le mécanisme de tension est synchronisé avec le mécanisme d'ajustement. Ainsi, la géométrie du parcours du lien est déterminé en permanence par la synchronisation des mécanismes, en fournissant ainsi la tension sur le lien juste nécessaire au fonctionnement de la transmission.

Le mécanisme de tension comporte un levier monté pivotant à une première extrémité sur le cadre autour d'un axe de levier, un premier basculeur monté pivotant d'une part sur un deuxième axe du levier en une deuxième extrémité opposée à la première extrémité et d'autre part sur le dispositif de suspension par l'intermédiaire d'une première extension du premier basculeur, le mécanisme de tension soit
- comportant en outre une deuxième extension du premier basculeur, coté lien souple, porteuse sur l'arrière du moyen d'appui, ou
- portant le moyen d'appui, avec l'axe de pivotement du premier basculeur sur le bras situé entre les axes de pivotement aux extrémités du levier. Le premier basculeur permet de lier, grâce à la première extension, les pivotements du dispositif de suspension et du levier, bien que ceux-ci aient des axes de pivotement distincts. L'action du premier moyen d'appui peut être réalisée directement en le montant sur le levier, ou indirectement, en le montant sur la deuxième extension. Dans ce dernier cas, on peut moduler différemment l'action du premier moyen d'appui en fonction du degré d'enfoncement de la suspension.

Selon une disposition constructive, le mécanisme d'ajustement comporte un organe basculant monté pivotant sur le cadre et portant l'axe d'oscillation du dispositif de suspension, et une première biellette montée sur un axe de commande solidaire de l'organe basculant pour commander le pivotement de l'organe basculant, le mécanisme d'ajustement tendant à déplacer le pivot d'oscillation vers le haut et/ou vers l'avant lors de la compression du dispositif de suspension. Ce mécanisme de basculement permet de moduler l'effet de chaîne en fonction de la compression de la suspension. Le mécanisme d'ajustement permet le pivotement de l'organe basculant par le mouvement du dispositif de suspension, donc selon la compression ou la détente de la suspension, ce qui fournit la progressivité de l'effet de chaîne.

Selon un mode de réalisation, la première biellette est commandée à son extrémité opposée à l'axe de commande par ledit levier du mécanisme de tension par pivotement sur un quatrième axe. On assure ainsi la synchronisation entre les deux mécanismes avec en outre une simplicité du fait de l'utilisation commune du levier et du premier basculeur pour les deux mécanismes.

Selon un autre mode de réalisation, la première biellette est commandée à son extrémité opposée à l'axe de commande par un deuxième basculeur monté pivotant sur le cadre, lui-même commandé par une deuxième biellette articulée d'une part sur le deuxième basculeur et d'autre part sur le dispositif de suspension. Le mécanisme d'ajustement est ainsi indépendant du mécanisme de tension, la synchronisation étant faite par le fait que les deux mécanismes sont entraînés par le dispositif de suspension. La géométrie des éléments est soigneusement choisie pour que la longueur de chaîne rattrapée par le mécanisme de tension corresponde au changement induit par le mécanisme d'ajustement pour les besoins du réglage de l'effet de chaîne, comme dans tous les cas de figure.

Selon un perfectionnement, le mécanisme de tension comporte en outre un deuxième moyen d'appui porté par le cadre, situé entre le premier moyen d'appui et le pignon d'entraînement et agissant vers le bas sur le brin inférieur du lien souple. En interposant ce deuxième moyen d'appui, on permet de tendre le lien lorsque la suspension se comprime, en modifiant en particulier l'amplitude de l'effet du premier moyen d'appui.

Selon une disposition constructive, l'organe basculant a un premier axe de pivotement par rapport au cadre du véhicule, l'axe d'oscillation du pivot étant situé entre le premier axe et l'axe du pignon d'entraînement.

Selon une disposition constructive, le moyen d'appui agit vers le haut sur un brin inférieur du lien souple.

Selon une disposition constructive, le moyen d'appui est choisi dans un groupe comprenant un pignon, une roulette et une glissière.

Selon une disposition constructive, le dispositif de suspension comporte deux bras de part et d'autre de la roue arrière.

De manière alternative, le dispositif de suspension comporte un unique bras le long d'un des côtés de la roue arrière.

Selon un mode de réalisation, le dispositif de suspension comporte un premier bras et un deuxième bras s'étendant vers l'arrière du véhicule et portant un porte-moyeu reliant le premier et le deuxième bras et portant la roue arrière motrice sensiblement en son milieu.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue latérale d'un véhicule conforme à un premier mode de réalisation de l'invention ;
- la figure 2 est une vue similaire à la figure 1 dans une position détendue de la suspension du véhicule ;
- la figure 3 est une vue similaire à la figure 1 d'un véhicule conforme à un deuxième mode de réalisation de l'invention ;
- la figure 4 est une vue similaire à la figure 1 d'un véhicule conforme à un troisième mode de réalisation de l'invention ;
- la figure 5 est une vue similaire à la figure 1 d'un véhicule conforme à un quatrième mode de réalisation non visé par les revendications ;
- la figure 6 est une vue similaire à la figure 1 d'un véhicule conforme à un cinquième mode de réalisation de l'invention.

### Description détaillée

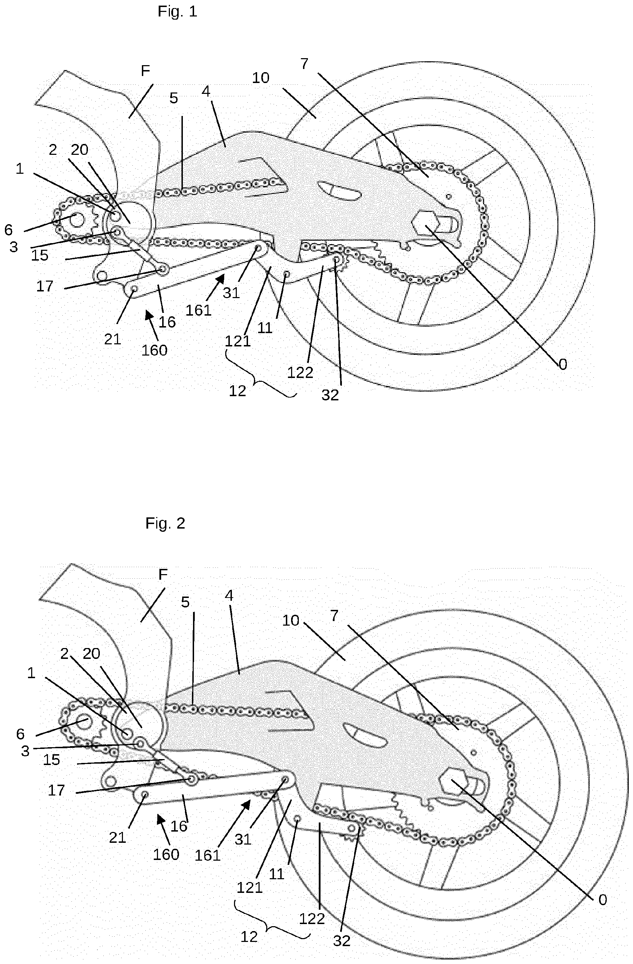

La description du fonctionnement correspondant aux figures 1 à 6 utilise des chiffres de références identiques pour les éléments fonctionnellement équivalents. Sur toutes les figures, l'avant de la moto est à gauche de la figure et l'arrière à droite. De même le haut et le bas correspondent à la situation de roulage de la moto.

Le premier mode de réalisation représenté sur les figures 1 et 2 montre une partie arrière d'une moto avec une représentation partielle d'un cadre F et d'une roue 10 motrice suspendue. La moto comporte un dispositif de suspension formant bras 4 solidaire en oscillation de son pivot 1 situé sur la partie avant d'un organe basculant 2 formant excentrique monté pivotant selon un premier axe 20 transversal de pivotement par rapport au cadre F du véhicule, par l'intermédiaire à titre non limitatif, de roulements à billes de grand diamètre. Le bras 4 supporte la roue 10 motrice en rotation sur son axe 0. Une couronne de transmission 7 est porteuse d'un lien souple formant chaîne 5 entraînée par un pignon menant 6 pour transmettre la puissance d'entraînement fournie par un moteur, non représenté.

La moto comporte en outre un mécanisme de tension pour régler la tension de la chaîne 5. Le mécanisme de tension comporte un levier 16 en oscillation à une première extrémité 160 sur un axe de levier 21 monté sur le cadre F, un premier basculeur 12 monté pivotant d'une part sur un deuxième axe 31 du levier 16 en une deuxième extrémité 161 opposée à la première extrémité 160, et d'autre part sur le bras 4 par l'intermédiaire d'une première extension 121 du premier basculeur 12 autour d'un troisième axe 11. Le premier basculeur 12 comporte une deuxième extension 122, coté chaîne, porteuse sur l'arrière d'un premier moyen d'appui 32.

Un mécanisme d'ajustement commande le pivotement de l'excentrique 2. Pour cela, le mécanisme d'ajustement comporte une biellette 15 montée pivotante à ses deux extrémités, d'une part sur un axe 3 de commande sur l'excentrique, décalé par rapport à au premier axe 20, et d'autre part sur un quatrième axe 17 porté par le levier 16. Le choix de la position du quatrième axe 17 sur le levier 16 permet de moduler la loi de commande du pivotement de l'excentrique 2.

La biellette 15, le levier 16, le bras 4, le basculeur 12 et l'extension 122 porteuse du pignon 32, comportent à chacune de leurs articulations 21, 31, 17, 11, 3 des éléments mécaniques d'oscillation tels que des rotules, bagues de friction, roulements à aiguilles ou à billes.

L'axe d'oscillation 1 du bras 4 est situé entre le premier axe 20 et l'axe du pignon d'entraînement 6. L'axe de levier 21 est situé au-dessous de l'excentrique 2. Le quatrième axe 17 est situé à l'arrière de l'axe de levier 21. Le deuxième axe est situé au-dessus de l'axe du premier basculeur 12. Le moyen d'appui est situé à l'arrière de l'axe du premier basculeur 12. Le moyen d'appui agit vers le haut sur un brin inférieur de la chaîne, appelé également le brin mou puisque le brin inférieur est détendu lorsque le moteur entraîne la roue.

La position de la suspension telle que représentée sur la figure 1 est sensiblement une position de compression dans laquelle le brin mou de la chaîne 5 est partiellement compressé par le moyen d'appui 32. Cette position est par exemple celle en virage, lorsque la force centrifuge ajoute de la charge en plus de la charge des masses suspendues. Lorsque la suspension se détend vers la position représentée sur la figure 2, le bras 4 pivote dans le sens horaire, tel que vu sur les figures autour de l'axe d'oscillation 1. Ce faisant, il entraîne le premier basculeur 12 vers le bas et donc le levier 16 également dans le sens horaire. Le premier basculeur 12 pivote également dans le sens horaire, ce qui détend le brin de chaîne 5. Dans le même temps, le levier 16 entraîne la biellette 15 qui commande ainsi le pivotement de l'excentrique 2 dans le sens anti-horaire, ce qui entraîne la position de l'axe d'oscillation 1 vers le bas.

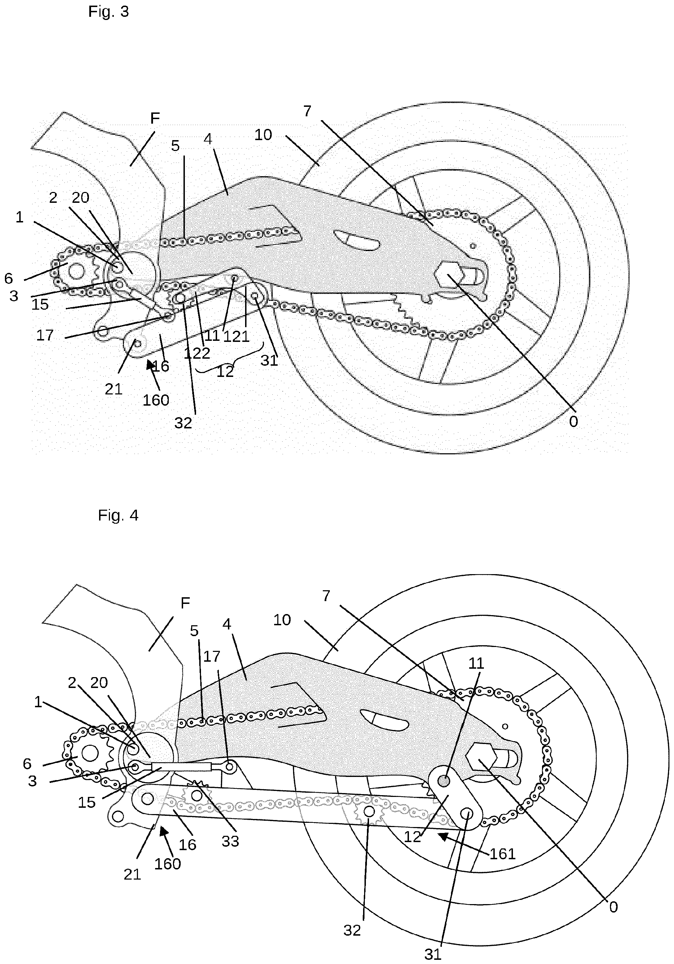

Selon un deuxième mode de réalisation, représenté sur la figure 3, le mécanisme de tension se distingue de celui du premier mode de réalisation en ce que l'axe du premier basculeur 12 est situé au-dessus et à l'avant du deuxième axe, et en ce que le moyen d'appui est situé entre l'axe du premier basculeur 12 et l'excentrique 2. Lors de la phase de détente de la suspension, le premier basculeur 12 pivote dans le sens anti-horaire, ce qui permet de détendre le brin mou de la chaîne 5.

Dans un troisième mode de réalisation, montré sur la figure 4, le mécanisme de tension se distingue de celui du premier mode de réalisation en ce que le premier basculeur 12 ne comporte pas de deuxième extension, en ce que le premier moyen d'appui 32 est porté par le levier 16 entre l'axe de levier 21 et le deuxième axe 31, et en ce qu'il comporte en outre un deuxième moyen d'appui 33 porté par le cadre F, situé entre le premier moyen d'appui 32 et le pignon d'entraînement 6 et agissant vers le bas sur le brin inférieur du lien souple. Lors de la phase de détente de la suspension, le deuxième moyen d'appui 33 relâche la tension sur la chaîne 5, de même que le premier moyen d'appui 32.

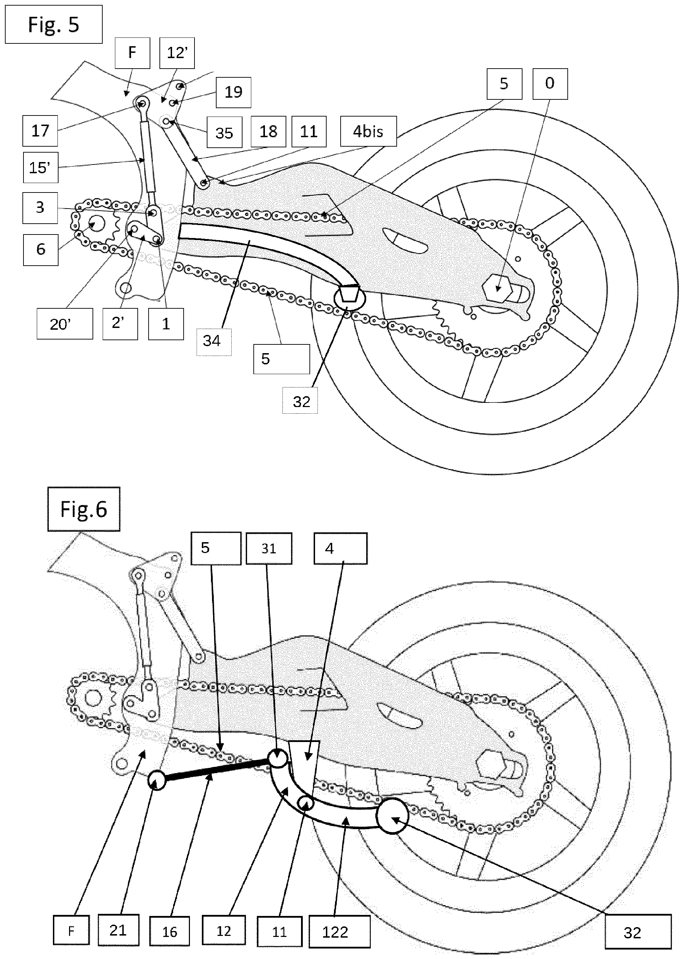

Dans un quatrième mode de réalisation, non visé par les revendications et montré sur la figure 5, le mécanisme d'ajustement se distingue de celui du premier mode de réalisation en ce que l'axe d'oscillation 1 est porté par un organe basculant 2' monté pivotant selon un axe transversal 20' et recevant l'axe de commande 3 et la première biellette 15', la première biellette 15' étant commandée à son extrémité opposée à l'axe de commande 3 par un deuxième basculeur 12' monté pivotant sur le cadre autour d'un quatrième axe 19, lui-même commandé par une deuxième biellette 18 articulée d'une part sur le deuxième basculeur 12' sur un cinquième axe 35 et d'autre part sur le dispositif de suspension 4 au niveau d'une excroissance 4his sur le deuxième axe 11. Le mécanisme de tension comporte quant à lui une lame de ressort 34 fixée sur le cadre F à une extrémité et portant le moyen d'appui 32 à l'autre extrémité. La lame de ressort peut être par exemple en acier ou en composite à base de fibres de carbone. L'axe 20' est situé entre le pignon d'entraînement et l'axe d'oscillation.

Lors de la phase de détente de la suspension, le dispositif de suspension entraîne la deuxième biellette 18 vers le bas, faisant pivoter le deuxième basculeur 12' dans le sens anti-horaire. La première biellette 15' est alors poussée également vers le bas ce qui provoque le pivotement de l'organe basculant 2' dans le sens horaire et le déplacement de l'axe d'oscillation 1 vers le bas. L'accélération angulaire de l'organe 12' est maximum lorsqu'on s'approche de l'alignement du quatrième axe 19, du cinquième axe 35 et du deuxième axe 11. Le brin inférieur de la chaîne 5 est maintenu en permanence en tension par le ressort 34 et le moyen d'appui 32.

Dans une variante non représentée, le ressort est monté non pas sur le cadre, mais sur le dispositif de suspension. Dans une autre variante non représentée, le moyen d'appui 32 agit par-dessous la chaîne 5 afin de la pousser vers le haut.

Un cinquième mode de réalisation, représenté sur la figure 6, est une combinaison du premier et du quatrième mode de réalisation, en ce qu'il comporte le mécanisme de tension du premier mode de réalisation et le mécanisme d'ajustement du quatrième mode de réalisation.

Les modes de réalisation ont été présentés avec des mécanismes réalisés sur un côté de la moto. Cependant, notamment lorsque le dispositif de suspension présente un bras de chaque côté de la roue motrice, le mécanisme d'ajustement peut être reproduit symétriquement de chaque côté afin de répartir et équilibrer les efforts. De même, les mécanismes sont représentés à l'extérieur du cadre et du dispositif de suspension pour faciliter la compréhension, mais on préférera les placer le plus à l'intérieur possible, par exemple entre deux montants du cadre ou entre les deux bras du dispositif de suspension. Le pivot d'oscillation pour le dispositif de suspension est montré mobile grâce à un excentrique ou un organe basculant, mais il pourrait être guidé par une glissière rectiligne ou courbe pour la progression.

## Revendications

1. Véhicule motorisé comportant une ou deux roues avant et une roue arrière (10) entraînée par au moins un système de transmission, un système de suspension pour la roue arrière (10) comportant un dispositif de suspension (4) porteur d'un axe de roue (0) sur lequel la roue arrière (10) est montée rotative, le véhicule comportant un cadre (F), le système de transmission comportant un pignon d'entraînement (6) monté rotatif par rapport au cadre (F), une couronne (7) solidaire de la roue arrière (10) et un lien souple (5) en boucle tel qu'une chaîne ou une courroie crantée reliant le pignon (6) et la couronne (7), le dispositif de suspension étant monté oscillant sur un pivot (1) autour d'un axe d'oscillation dont la position sur le cadre (F) est réglée par un mécanisme d'ajustement progressif d'un effet de chaîne, où le véhicule comporte en outre un mécanisme de tension (16, 12) du lien souple (5) comportant au moins un moyen d'appui (32) pour appuyer sur le lien souple (5) et le tendre ainsi en fonction de l'orientation du dispositif de suspension (4), le mécanisme de tension étant synchronisé avec le mécanisme d'ajustement, **caractérisé en ce que** le mécanisme de tension comporte un levier (16) monté pivotant à une première extrémité (160) sur le cadre (F) autour d'un axe de levier (21), un premier basculeur (12) monté pivotant d'une part sur un deuxième axe (31) du levier (16) en une deuxième extrémité (161) opposée à la première extrémité (160) et d'autre part sur le dispositif de suspension (4) par l'intermédiaire d'une première extension (121) du premier basculeur (12), le mécanisme de tension soit
- comportant en outre une deuxième extension (122) du premier basculeur (12), coté lien souple (5), porteuse sur l'arrière du moyen d'appui (32), ou
- portant le moyen d'appui, avec l'axe de pivotement du premier basculeur (12) sur le dispositif de suspension (4) situé entre les axes de pivotement (21, 31) aux extrémités du levier (16).

2. Véhicule selon la revendication 1, dans lequel le mécanisme d'ajustement comporte un organe basculant (2, 2') monté pivotant sur le cadre et portant l'axe d'oscillation du dispositif de suspension, et une première biellette (15, 15') montée sur un axe de commande (3) solidaire de l'organe basculant (2, 2') pour commander le pivotement de l'organe basculant (2, 2'), le mécanisme d'ajustement tendant à déplacer le pivot d'oscillation (1) vers le haut et/ou vers l'avant lors de la compression du dispositif de suspension (4).

3. Véhicule selon la revendication 2, dans lequel la première biellette (15) est commandée à son extrémité opposée à l'axe de commande (3) par ledit levier (16) du mécanisme de tension par pivotement sur un quatrième axe (17).

4. Véhicule selon la revendication 2, dans lequel la première biellette (15') est commandée à son extrémité opposée à l'axe de commande (3) par un deuxième basculeur (12') monté pivotant sur le cadre (F), lui-même commandé par une deuxième biellette (18) articulée d'une part sur le deuxième basculeur (12') et d'autre part sur le dispositif de suspension (4).

5. Véhicule selon l'une des revendications 1 à 3, dans lequel le mécanisme de tension comporte en outre un deuxième moyen d'appui (33) porté par le cadre, situé entre le premier moyen d'appui (32) et le pignon d'entraînement (6) et agissant vers le bas sur un brin inférieur du lien souple (5).

6. Véhicule selon la revendication 2, dans lequel l'organe basculant (2) a un premier axe (20) de pivotement par rapport au cadre (F) du véhicule, l'axe d'oscillation du pivot (1) étant situé entre le premier axe (20) et l'axe du pignon d'entraînement (6).

7. Véhicule selon l'une des revendications précédentes, dans lequel le moyen d'appui (32) agit vers le haut sur un brin inférieur du lien souple (5).

8. Véhicule selon l'une des revendications précédentes, dans lequel le moyen d'appui (32, 33) est choisi dans un groupe comprenant un pignon, une roulette et une glissière.

9. Véhicule selon l'une des revendications précédentes, dans lequel le dispositif de suspension comporte deux bras de part et d'autre de la roue arrière (10).

10. Véhicule selon l'une des revendications 1 à 8, dans lequel le dispositif de suspension comporte un unique bras le long d'un des côtés de la roue arrière (10).

11. Véhicule selon l'une des revendications 1 à 8, dans lequel le dispositif de suspension comporte un premier bras et un deuxième bras s'étendant vers l'arrière du véhicule et portant un porte-moyeu reliant le premier et le deuxième bras et portant la roue arrière (10) motrice sensiblement en son milieu.

## Patentansprüche

1. Motorfahrzeug mit: einem Vorderrad oder zwei Vorderrädern vorne und einem Hinterrad (10), das von mindestens einem Antriebssystem angetrieben wird; einem Federungssystem für das Hinterrad (10) mit einer Aufhängungsvorrichtung (4), die eine Radachse (0) trägt, an der das Hinterrad (10) drehend befestigt ist, wobei das Fahrzeug einen Rahmen (F) und das Antriebssystem ein Antriebsritzel (6) aufweist, das gegenüber dem Rahmen (F) drehend befestigt ist; einem mit dem Hinterrad (10) fest verbundenen Zahnkranz (7); und einer flexiblen, schleifenförmigen Verbindung (5) in Form einer Kette oder eines Zahnriemens, die das Antriebsritzel (6) mit dem Zahnkranz (7) verbindet, wobei die Aufhängungsvorrichtung (4) an einem Zapfen (1) um eine Pendelachse pendelnd befestigt ist, deren Position am Rahmen (F) von einem Mechanismus zur progressiven Anpassung eines Ketteneffekts eingestellt wird, das Fahrzeug darüber hinaus einen Mechanismus (16, 12) zum Spannen der flexiblen Verbindung (5) mit mindestens einer Spannvorrichtung (32) aufweist, die auf die flexible Verbindung (5) Druck ausübt und diese so der Ausrichtung der Aufhängungsvorrichtung (4) entsprechend spannt, wobei der Spannmechanismus mit dem Einstellmechanismus synchronisiert und **dadurch gekennzeichnet ist, dass** er einen Hebel (16), der an einem ersten Ende (160) am Rahmen (F) um eine Hebelachse (21) herum schwenkbar befestigt ist, [und] einen ersten Kipphebel (12) aufweist, der einerseits an einer zweiten Achse (31) des Hebels (16) an einem zweiten (161), dem ersten (160) gegenüberliegenden Ende sowie andererseits an der Aufhängungsvorrichtung (4) über eine erste Verlängerung (121) des ersten Kipphebels (12) schwenkbar befestigt ist, wobei der Spannmechanismus entweder
- darüber hinaus eine zweite, tragende Verlängerung (122) des ersten Kipphebels (12) auf Seiten der flexiblen Verbindung (5) an der Rückseite der Spannvorrichtung (32) aufweist oder
- die Spannvorrichtung trägt, wobei die Schwenkachse des ersten Kipphebels (12) an der Aufhängungsvorrichtung (4) zwischen den Schwenkachsen (21, 31) an den Enden des Hebels (16) angeordnet ist.

2. Fahrzeug gemäß Anspruch 1, in welchem der Einstellmechanismus ein Kipporgan (2, 2'), das schwenkbar am Rahmen befestigt ist und die Pendelachse der Aufhängungsvorrichtung trägt, und eine erste Schwinge (15, 15') aufweist, die an einer Schaltachse (3) befestigt ist, welche mit dem Kipporgan (2, 2') fest verbunden ist, um den Schwenkvorgang des Kipporgans (2, 2') auszulösen, wobei der Einstellmechanismus den Pendelzapfen (1) beim Komprimieren der Aufhängungsvorrichtung (4) tendenziell nach oben und/oder nach vorne verschiebt.

3. Fahrzeug gemäß Anspruch 2, in welchem die erste Schwinge (15) an ihrem der Schaltachse (3) gegenüberliegenden Ende von besagtem Hebel (16) des Spannmechanismus' durch Schwenken um eine vierte Achse (17) geführt wird.

4. Fahrzeug gemäß Anspruch 2, in welchem die erste Schwinge (15') an ihrem der Schaltachse (3) gegenüberliegenden Ende von einem zweiten Kipphebel (12') geführt wird, der schwenkbar am Rahmen (F) befestigt ist und seinerseits von einer zweiten Schwinge (18) betätigt wird, die einerseits am zweiten Kipphebel (12') und andererseits an der Aufhängungsvorrichtung (4) gelenkig befestigt ist.

5. Fahrzeug gemäß einem der Ansprüche 1 bis 3, in welchem der Spannmechanismus darüber hinaus eine zweite, vom Rahmen getragene Spannvorrichtung (33) aufweist, die zwischen der ersten Spannvorrichtung (32) und dem Antriebsritzel (6) angeordnet ist und nach unten auf ein unteres Glied der flexiblen Verbindung (5) wirkt.

6. Fahrzeug gemäß Anspruch 2, in welchem das Kipporgan (2) eine erste Schwenkachse (20) gegenüber dem Rahmen (F) des Fahrzeugs aufweist, wobei die Pendelachse des Zapfens (1) zwischen der ersten Achse (20) und der Achse des Antriebsritzels (6) angeordnet ist.

7. Fahrzeug gemäß einem der vorstehenden Ansprüche, in welchem die Spannvorrichtung (32) nach oben auf ein unteres Glied der flexiblen Verbindung (5) wirkt.

8. Fahrzeug gemäß einem der vorstehenden Ansprüche, in welchem die Spannvorrichtung (32, 33) durch eine Einheit aus einem Ritzel, einer kleinen Rolle und einer Gleitschiene gebildet wird.

9. Fahrzeug gemäß einem der vorstehenden Ansprüche, in welchem die Aufhängungsvorrichtung zwei Schwingen beiderseits des Hinterrads (10) aufweist.

10. Fahrzeug gemäß einem der Ansprüche 1 bis 8, in welchem die Aufhängungsvorrichtung eine einzelne Schwinge entlang einer Seite des Hinterrads (10) aufweist.

11. Fahrzeug gemäß einem der Ansprüche 1 bis 8, in welchem die Aufhängungsvorrichtung eine erste und eine zweite Schwinge aufweist, die sich zum hinteren Teil des Fahrzeugs hin erstrecken und einen Hinterbolzen aufweisen, der die erste mit der zweiten Schwinge verbindet und das hintere Antriebsrad ungefähr in der Mitte hält.

## Claims

1. Motorised vehicle comprising one or two front wheel and one rear wheel (10) driven by at least one transmission system, a suspension assembly for the rear wheel (10) comprising a suspension system (4) supporting a wheel axle (0) on which the rear wheel (10) is mounted in rotation, the vehicle comprising a frame (F), the transmission system comprising a drive pinion (6) mounted in rotation with respect to the frame (F), a crown gear (7) integral with the rear wheel (10) and a looped flexible linkage (5) such as a chain or a toothed belt linking the pinion (6) and the crown gear (7), the suspension system being mounted swinging on a pivot (1) around a fulcrum pin whose position on the frame (F) is set by a progressive anti-squat effect adjustment mechanism, wherein the vehicle also comprises a flexible linkage tension mechanism (16, 12) comprising at least one pressure application device (32) pressing on the flexible linkage (5) and thus tautening it according to the direction of the suspension system (4), the tension mechanism being synchronised with the adjustment mechanism, **characterized in that** the tension mechanism comprises a lever (16) mounted swivelling at one end (160) on the frame (F) around a pivot pin (21), a first rocker (12) mounted swivelling on the one hand around a second pin (31) of the lever (16) at the other end (161) opposite the first end (160) and on the other hand on the suspension system (4) by a first extension (121) of the first rocker (12), the tension mechanism either
- also comprising a second extension (122) of the first rocker (12), on the flexible linkage side (5), bearing on the rear of the pressure application device (32), or
- bearing the pressure application device, with the pivot pin of the first rocker (12) on the suspension system (4) situated between the pivot pins (21, 31) at the ends of the lever (16).

2. Vehicle as per the claim 1, in which the adjustment mechanism comprises a rocker part (2, 2') mounted swivelling on the frame and bearing the suspension system's fulcrum pin, and a first link rod (15, 15') mounted on a control pin (3) integral with the rocker part (2, 2') to control the swivelling of the rocker part (2, 2'), the adjustment mechanism tending to move the swinging pivot (1) upwards and/or forwards at the time of the compression of the suspension system (4).

3. Vehicle as per claim 2, in which the first link rod (15) is controlled at its end opposite to the control pin (3) by said lever (16) of the tension mechanism by swivelling on a fourth pin (17).

4. Vehicle as per claim 2, in which the first link rod (15') is controlled at its end opposite to the control pin (3) by a second rocker (12') mounted swivelling on the frame (F), itself controlled by a second link rod (18) hinged on the one hand on the second rocker (12') and on the other hand on the suspension system (4).

5. Vehicle as per claims 1 to 3, in which the tension mechanism also comprises a second pressure application device (33) supported by the frame, situated between the first pressure application device (32) and the drive pinion (6) and acting downwards on the lower run of the flexible linkage (5).

6. Vehicle as per claim 2, in which the rocker part (2) has a first pin (20) for swivelling with respect to the vehicle's frame (F), the swivel axis of the first pivot (1) being situated between the first pin (20) and the drive pinion shaft (6).

7. Vehicle as per one of the above claims, in which the pressure application device (32) acts upwards on the lower run of the flexible linkage (5).

8. Vehicle as per one of the above claims, in which the pressure application device (32, 33) is chosen in a group comprising a pinion, a roller and a slide.

9. Vehicle as per one of the above claims, in which the suspension system comprises two arms on each side of the wheel (10).

10. Vehicle as per one of the claims 1 to 8, in which the suspension system comprises a single arm along one side of the rear wheel (10).

11. Vehicle as per one of the claims 1 to 8, in which the suspension system comprises a first arm and a second arm extending towards the rear of the vehicle and supporting a hub holder, linking the first and second arms and supporting the drive rear wheel substantially in its middle.
